# FASCICULE DE BREVET EUROPEEN

(11) **EP 3 992 729 B1**
(45) Date de publication et mention de la délivrance du brevet: **20.05.2026**
(21) Numéro de dépôt: 20204749.4
(22) Date de dépôt: 29.10.2020
(51) Int. Cl.: F16C 27/06, F16C 11/12, G04B 17/04

(54) **GUIDAGE FLEXIBLE AVEC TABLE DE TRANSLATION POUR MÉCANISME RÉSONATEUR ROTATIF, NOTAMMENT D'UN MOUVEMENT D'HORLOGERIE**
FLEXIBLE FÜHRUNG MIT VERSCHIEBETISCH FÜR EINEN ROTIERENDEN RESONATORMECHANISMUS, INSBESONDERE EINES UHRWERKS
FLEXIBLE GUIDE WITH TRANSLATION TABLE FOR ROTARY RESONATOR MECHANISM, IN PARTICULAR FOR A TIMEPIECE MOVEMENT

(43) Date de publication de la demande: 04.05.2022
(73) Titulaire: The Swatch Group Research and Development Ltd, 2074 Marin (CH)
(72) Inventeur: KAHROBAIYAN, Mohammad Hussein, 2043 Boudevilliers (CH)
(74) Mandataire: ICB SA

(56) Documents cités:
- EP-A1- 3 722 888
- "Flexure Pivot Oscillators for Mechanical Watches", 18 June 2020, article ETIENNE F. G. THALMANN: "Flexure Pivot Oscillators for Mechanical Watches", XP055731304, DOI: 10.5075/epfl-thesis-8802

## Description

### Domaine de l'invention

La présente invention concerne un guidage flexible avec table de translation pour mécanisme résonateur rotatif, notamment d'un mouvement d'horlogerie. L'invention se rapporte encore à un mécanisme résonateur rotatif muni d'un tel guidage flexible.

### Arrière-plan de l'invention

La plupart des montres mécaniques actuelles sont munie d'un balancier-spiral et d'un mécanisme d'échappement à ancre suisse. Le balancier-spiral constitue la base de temps de la montre. On l'appelle aussi résonateur.

L'échappement, quant à lui, remplit deux fonctions principales:
- entretenir les va-et-vient du résonateur :
- compter ces va-et-vient.

Pour constituer un résonateur mécanique, il faut un élément inertiel, un guidage et un élément de rappel élastique. Traditionnellement, un ressort spiral joue le rôle d'élément de rappel élastique pour l'élément inertiel que constitue un balancier. Ce balancier est guidé en rotation par des pivots qui tournent dans des paliers lisses en rubis. Cela donne lieu à des frottements, et donc à des pertes d'énergie et des perturbations de marche, qui dépendent des positions, et que l'on cherche à supprimer.

On utilise aujourd'hui des guidages flexibles comme ressort pour former un pivot virtuel. Les guidages flexibles à pivot virtuel permettent d'améliorer sensiblement les résonateurs horlogers. Les plus simples sont des pivots à lames croisées, composés de deux dispositifs de guidage à lames droites qui se croisent, en général perpendiculairement. Ces deux lames peuvent être, soit tridimensionnelles dans deux plans différents, soit bidimensionnelles dans un même plan et sont alors comme soudées à leur point de croisement.

Cependant, lorsqu'on veut utiliser des lames flexibles pour faire pivoter un balancier annulaire rotatif de manière semblable au mouvement d'un balancier avec un spiral, on n'arrive pas à obtenir un mouvement isochrone. En effet, on n'arrive pas à obtenir mouvement rotatif de la masse parfaitement périodique. Le couple de rappel n'est pas linéaire, ce qui engendre un anisochronisme en fonction de l'amplitude de déplacement de la masse et une erreur de marche du mouvement. Le document "Flexure Pivot Oscillators for Mechanical Watches" d'Etienne F. G. Thalmann montre un oscillateur où les tables de translation sont reliées à un support fixe.

### Résumé de l'invention

Un but de l'invention est, par conséquent, de proposer un guidage flexible pour mécanisme résonateur rotatif, qui évite les problèmes précités.

A cet effet, l'invention concerne un guidage flexible pour un mécanisme résonateur rotatif, notamment d'un mouvement d'horlogerie, le guidage comprenant un support fixe, un élément mobile par rapport au support fixe, au moins deux lames flexibles principales permettant à l'élément mobile de se déplacer par rapport au support fixe par flexion des lames flexibles principales dans un mouvement rotatif autour d'un centre de rotation, le guidage flexible étant agencé sensiblement dans un plan.

Le guidage flexible est remarquable en ce qu'il comprend au moins deux tables de translation jointes chacune à une extrémité d'une lame flexible principale, de sorte que chaque table de translation soit configurée pour se déplacer en translation au moins en partie sous l'effet de la flexion de la lame flexible principale correspondante, le guidage flexible comprenant au moins une lame flexible tertiaire reliant les deux tables de translation.

Grâce à l'invention, on obtient un guidage à lames flexibles isochrone. En effet, la table de translation permet à la lame principale de se déplacer lorsqu'elle se courbe, et ainsi de conserver un coefficient de rappel sensiblement constant. Un tel guidage flexible garantit un isochronisme du mouvement.

Selon une forme de réalisation avantageuse, le guidage comprend au moins trois couples, chaque couple étant formé d'une lame principale et d'une table de translation, les couples étant répartis angulairement de manière à former un pivot symétrique, le guidage comprenant au moins deux lames flexibles tertiaires, de préférence trois lames flexibles tertiaires, reliant les tables de translation deux à deux.

Selon une forme de réalisation avantageuse, chaque table de translation est agencée en série entre le support fixe et ladite lame flexible principale correspondante, la table de translation étant jointe au support fixe et à une première extrémité de la lame flexible principale, la lame flexible principale étant jointe à l'élément mobile par une seconde extrémité.

Selon une forme de réalisation avantageuse, chaque table de translation est agencée en série entre ladite lame flexible principale correspondante et l'élément mobile, la table de translation étant jointe à l'élément mobile et à la seconde extrémité de la lame flexible principale, la lame flexible principale étant jointe au support fixe par la première extrémité.

Selon une forme de réalisation avantageuse, l'élément mobile comprend une partie centrale du guidage flexible.

Selon une forme de réalisation avantageuse, le support fixe comprend la partie centrale du guidage flexible.

Selon une forme de réalisation avantageuse, la table de translation principale comprend au moins une lame flexible secondaire, de préférence deux lames flexibles secondaires, et une partie rigide, la lame flexible secondaire étant jointe par une extrémité à la partie rigide, et par une autre extrémité, soit au support fixe, soit à l'élément mobile.

Selon une forme de réalisation avantageuse, les lames flexibles secondaires sont disposées sur des lignes différentes.

Selon une forme de réalisation avantageuse, les lames flexibles secondaires sont sensiblement parallèles.

Selon une forme de réalisation avantageuse, le guidage flexible comprend au moins une table de translation secondaire agencée en série entre deux tables de translation principales, chaque table de translation secondaire étant reliée à deux tables de translation principales par une lame flexible tertiaire par table de translation principale.

Selon une forme de réalisation avantageuse, la table de translation secondaire comprend une lame flexible quaternaire, de préférence deux lames flexibles quaternaires, et une partie rigide, les lames flexibles quaternaires étant jointes à la partie rigide des tables de translation secondaires par une extrémité et par une autre extrémité, soit au support fixe, soit à l'élément mobile.

Selon une forme de réalisation avantageuse, les lames flexibles quaternaires sont disposées sur des lignes différentes.

Selon une forme de réalisation avantageuse, les lames flexibles quaternaires sont sensiblement parallèles.

Selon une forme de réalisation avantageuse, les lames flexibles tertiaires sont jointes aux parties rigides des deux tables de translation qu'elles relient.

Selon une forme de réalisation avantageuse, la partie rigide forme un coude de sorte que la ou les lames flexibles principales soient sensiblement perpendiculaires à la ou aux lames flexibles secondaires de la table de translation jointe à la lame flexible principale en position de repos du guidage.

Selon une forme de réalisation avantageuse, l'élément mobile comprend un balancier.

L'invention se rapporte aussi à un mécanisme résonateur rotatif, notamment pour mouvement horloger, le mécanisme comportant un guidage flexible selon l'invention.

### Description sommaire des dessins

D'autres caractéristiques et avantages de la présente invention apparaîtront à la lecture de plusieurs formes de réalisation données uniquement à titre d'exemples non limitatifs, en référence aux dessins annexés dans lesquels :
- la figure 1 représente schématiquement une vue de dessus d'un guidage flexible selon un premier mode de réalisation de l'invention,
- la figure 2 représente schématiquement une vue de dessus d'un guidage flexible selon un deuxième mode de réalisation de l'invention,
- la figure 3 représente schématiquement une vue de dessus d'un guidage flexible selon un troisième mode de réalisation de l'invention,
- la figure 4 représente schématiquement une vue de dessus d'un guidage flexible selon un quatrième mode de réalisation de l'invention,
- la figure 5 représente schématiquement une vue de dessus d'un guidage flexible selon un cinquième mode de réalisation de l'invention,
- la figure 6 représente schématiquement une vue de dessus de deux variantes de réalisation de lames flexibles selon l'invention,
- la figure 7 représente schématiquement une vue de dessus d'un guidage flexible selon un sixième mode de réalisation de l'invention, et
- la figure 8 représente schématiquement une vue de dessus d'un guidage flexible selon un septième mode de réalisation de l'invention.

### Description détaillée de modes de réalisation préférés

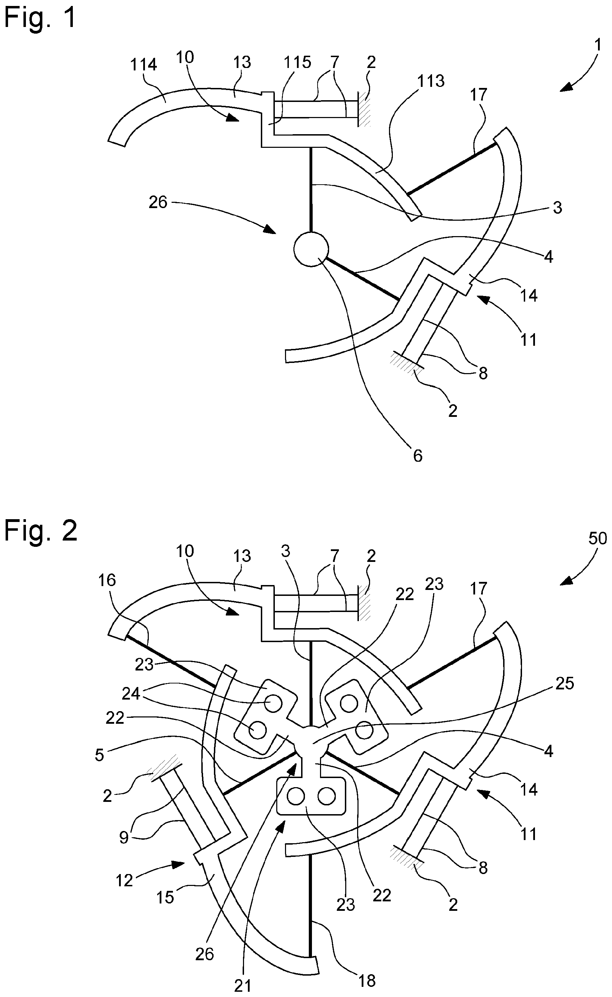

Sur la figure 1 est représenté un premier mode de réalisation d'un guidage flexible 1 pour un mécanisme résonateur rotatif, notamment d'un mouvement d'horlogerie. Le guidage flexible 1 est agencé sensiblement dans un plan. Le guidage flexible comprend un support fixe 2, un élément mobile 26 par rapport au support fixe 2 et deux lames flexibles principales 3, 4. Les lames flexibles principales 3, 4 permettent à l'élément mobile 20 de se déplacer par rapport au support fixe 2. Par flexion des lames flexibles principales 3, 4, l'élément mobile 20 peut se déplacer par rapport au support 2 dans un mouvement rotatif sur lui-même autour d'un centre de rotation. Les lames principales 3, 4 sont, de préférence, de même longueur et réparties angulairement de manière uniforme autour d'une partie centrale 6 de l'élément mobile 20 et du guidage flexible 1, de manière à former un pivot symétrique.

Selon l'invention, le guidage flexible 1 comprend deux tables de translation 10, 11, chaque table de translation étant jointe à une extrémité d'une lame flexible principales 3, 4 différente. Dans ce mode de réalisation, chaque table de translation 10, 11 est agencée en série entre le support fixe 2 et ladite lame flexible principale 3, 4 correspondante. La table de translation 10, 11, est jointe au support fixe 2 et à une première extrémité de la lame flexible principale 3, 4 correspondante, la lame flexible principale 3, 4 étant jointe à la partie centrale 6 par une seconde extrémité.

Ainsi, le guidage flexible 1 comprend deux couples, chaque couple étant formé d'une lame flexible principale 3, 4 et d'une table de translation 10, 11. Les couples sont répartis angulairement autour de la partie centrale 6, chaque lame principale 3, 4 étant jointe par une extrémité à la partie centrale 6 et la table de translation 10, 11 étant jointe au support fixe 2. Les couples, notamment les lames principales 3, 4, forment par exemple un angle d'environ 120° entre eux. La partie centrale 6 est par exemple une portion de cylindre circulaire. Dans ce mode de réalisation, l'élément mobile 20 comprend la partie centrale 6.

Chaque table de translation 10, 11 est configurée pour se déplacer en translation au moins en partie sous l'effet du mouvement de la lame flexible principale 3, 4. Chaque table de translation 10, 11 comprend au moins une lame flexible secondaire 7, 8, ici deux lames flexibles secondaires 7, 8 sensiblement parallèles, et une partie rigide 13, 14. Les lames flexibles secondaires 7, 8 sont disposées sur des lignes différentes. De préférence, les lames flexibles secondaires 7, 8 sont jointes par une extrémité à une même face de la partie rigide 13, 14 et par une autre extrémité au support fixe 2. La partie rigide 13, 14 forme un coude en angle droit, le coude comportant trois segments 113, 114, 115 reliés ensemble par leurs extrémités. Le deuxième segment 115 du milieu est sensiblement perpendiculaire aux deux autres 113, 114. Le premier 113 et le troisième segment 114 sont courbes aux extrémités libres pour garder une forme sensiblement concentrique du guidage 1. Les premiers 113 et troisièmes 114 segments de chaque table de translation 10, 11 sont assez longs pour que l'extrémité du troisième segment 114 d'une première table et l'extrémité libre du premier segment 113 d'une deuxième table adjacente soient superposés par rapport au centre du guidage flexible 1.

Le guidage 1 comprend une lame flexible tertiaire 17 reliant les deux tables de translation 10, 11. La lame flexible tertiaire 17 est jointe aux parties rigides 13, 14, des tables de translation 10, 11. Plus particulièrement, la lame flexible tertiaire 17 relie l'extrémité du troisième segment 114 d'une première table 11 et l'extrémité du premier segment 113 de la deuxième table 10. La lame flexible tertiaire 17 est dirigée selon une direction radiale passant par le centre du guidage flexible 1 en position de repos du guidage 1.

La lame flexible tertiaire 17 évite le déplacement des tables de translation 10, 11 à cause de la gravité. En effet, lorsqu'une table 10, 11 se déplace vers le centre du guide 1, l'autre table 10, 11, se déplace également vers le centre grâce à la lame flexible tertiaire 17. Réciproquement, les tables de translation 10, 11 se déplacent ensemble vers la périphérie du guide 1 grâce à la lame flexible tertiaire 17. Ainsi, les tables 10, 11 suivent le même déplacement par rapport au centre du guide 1. On améliore ainsi la précision de la marche du mouvement, qui est moins sensible à la gravité.

La lame flexible principale 3, 4 est jointe au premier segment 113, tandis que les lames secondaires 7, 8 sont jointes au deuxième segment 115. Ainsi, les lames flexibles principales 3, 4 sont sensiblement perpendiculaires aux lames flexibles secondaires 7, 8 de la table de translation 10, 11 en position repos du guidage 1. La position de repos est définie quand les lames principales 3, 4 et secondaires 7, 8 sont droites, donc non courbées.

L'élément mobile 26 comprend en outre un balancier, non représenté sur la figure, qui est par exemple en forme d'anneau. Le balancier comporte une partie annulaire externe et des bras, par exemple trois bras, joignant la partie annulaire à une jonction axiale par rapport à la partie annulaire. Les bras sont concentriques et de même longueurs. Le balancier est assemblé sur la partie centrale 6 par la jonction. De préférence, la partie centrale et la jonction sont monoblocs. Ainsi, le balancier est centré par rapport à la partie centrale 6. Dans cette variante, le balancier est formé d'une même matière, c'est-à-dire qu'il est monobloc.

Lorsque le balancier est en mouvement, il suit, dans le plan du balancier, un mouvement de rotation périodique dans un sens, puis dans l'autre sens, autour d'un axe passant par la jonction et la partie centrale 6. Les lames flexibles principales 3, 4 se courbent et ont une fonction de ressort rappel du balancier pour le faire tourner dans l'autre sens et réciproquement. Les tables de translation 10, 11 permettent aux lames principales 3, 4 de se déplacer longitudinalement en même temps qu'elles se courbent. Les parties rigides 13, 14 des tables de translation 10, 11 se rapprochent de la partie centrale 6 grâce aux lames secondaires 7, 8 lorsque les lames principales 3, 4 se courbent, et s'éloignent de la partie centrale 6 lorsque les lames principales 3, 4 deviennent droites. Ainsi, on conserve un isochronisme du mouvement du balancier grâce aux tables de translation 10, 11. De préférence, la lame tertiaire 17 est orientée selon la bissectrice de l'angle formé entre les lames principales 3, 4 en opposition de repos du guidage 1. De manière équivalente, la lame tertiaire 17 est, de préférence, orientée selon la bissectrice de l'angle formé entre les directions des lames des tables de translation 10, 11.

Sur la figure 2, est représenté un deuxième mode de réalisation d'un guidage flexible 50 pour un mécanisme résonateur rotatif, notamment d'un mouvement d'horlogerie. Le guidage flexible 50 est agencé sensiblement dans un plan. Le guidage flexible comprend un support fixe 2, un élément mobile 26 par rapport au support fixe 2 et trois lames flexibles principales 3, 4, 5. Les lames flexibles principales 3, 4, 5 permettent à l'élément mobile 20 de se déplacer par rapport au support fixe 2. Par flexion des lames flexibles principales 3, 4, 5, l'élément mobile 20 peut se déplacer par rapport au support 2 dans un mouvement rotatif sur lui-même autour d'un centre de rotation. Les lames principales 3, 4, 5 sont, de préférence, de même longueur et réparties angulairement de manière uniforme autour d'une partie centrale 6 de l'élément mobile 20 et du guidage flexible 1, de manière à former un pivot symétrique.

Selon l'invention, le guidage flexible 1 comprend des tables de translation 10, 11, 12, chaque table de translation étant jointe à une extrémité d'une lame flexible principales 3, 4, 5 différente. Dans ce mode de réalisation, chaque table de translation 10, 11, 12, est agencée en série entre le support fixe 2 et ladite lame flexible principale 3, 4, 5 correspondante. La table de translation 10, 11, 12, est jointe au support fixe 2 et à une première extrémité de la lame flexible principale 3, 4, 5 correspondante, la lame flexible principale 3, 4, 5 étant jointe à la partie centrale 6 par une seconde extrémité.

Ainsi, le guidage flexible 1 comprend trois couples, chaque couple étant formé d'une lame flexible principale 3, 4, 5 et d'une table de translation 10, 11, 12. Les couples sont répartis angulairement autour de la partie centrale 6, de manière à former un pivot symétrique, chaque lame principale 3, 4, 5 étant jointe par une extrémité à la partie centrale 6 et la table de translation 10, 11, 12 étant jointe au support fixe 2. Les couples, notamment les lames principales 3, 4, 5, forment un angle d'environ 120° entre eux. La partie centrale 6 est par exemple une portion de cylindre circulaire. Dans ce mode de réalisation, l'élément mobile 20 comprend la partie centrale 6.

Chaque table de translation 10, 11, 12 est configurée pour se déplacer en translation au moins en partie sous l'effet du mouvement de la lame flexible principale 3, 4, 5. Chaque table de translation 10, 11, 12 comprend au moins une lame flexible secondaire 7, 8, 9, ici deux lames flexibles secondaires 7, 8, 9 sensiblement parallèles, et une partie rigide 13, 14, 15. Les lames flexibles secondaires 7, 8, 9 sont disposées sur des lignes différentes. De préférence, les lames flexibles secondaires 7, 8 sont jointes par une extrémité à la partie rigide 13, 14, 15 et par une autre extrémité au support fixe 2. La partie rigide 13, 14, 15 forme un coude en angle droit, le coude comportant trois segments 113, 114, 115 reliés ensemble par leurs extrémités. Le deuxième segment 115 du milieu est sensiblement perpendiculaire aux deux autres 113, 114. Le premier 113 et le troisième segment 114 sont courbes aux extrémités libres pour garder une forme sensiblement concentrique du guidage 1. Les premiers 113 et troisièmes 114 segments de chaque table de translation 10, 11, 12 sont assez longs pour que l'extrémité du troisième segment 114 d'une première table et l'extrémité libre du premier segment 113 d'une deuxième table adjacente soient superposés par rapport au centre du guidage flexible 1.

Le guidage 1 comprend trois lames flexibles tertiaires 16, 17, 18, chaque lame flexible tertiaires 16, 17, 18 reliant deux tables de translation différentes 10, 11, 12. Les lames flexibles tertiaires 16, 17, 18 sont jointes aux parties rigides 13, 14, 15 des tables de translation 10, 11, 12. Plus particulièrement, les lames flexibles tertiaires 16, 17, 18 relient l'extrémité du troisième segment 114 d'une première table 10, 11, 12 et l'extrémité du premier segment 113 de la deuxième table 10, 11, 12. Les lames flexibles tertiaires 16, 17, 18 sont dirigées selon une direction radiale passant par le centre du guidage flexible 1 en position de repos du guidage 1.

Les lames flexibles tertiaires 16, 17, 18 évitent le déplacement des tables de translation 10, 11, 12 à cause de la gravité. En effet, lorsqu'une table 10, 11, 12 se déplace vers le centre du guide 1, les autres tables 10, 11, 12 se déplacent également vers le centre grâce aux lames flexibles tertiaires 16, 17, 18. Réciproquement, les tables de translation 10, 11, 12 se déplacent ensemble vers la périphérie du guide 1 grâce aux lames flexibles tertiaires 16, 17, 18. Ainsi, les tables 10, 11, 12 suivent le même déplacement par rapport au centre du guide 1. On améliore ainsi la précision de la marche du mouvement, qui est moins sensible à la gravité.

La lame flexible principale 3, 4, 5, est jointe au premier segment 113, tandis que les lames secondaires 7, 8, 9 sont jointes au deuxième segment 115. Ainsi, les lames flexibles principales 3, 4, 5 sont sensiblement perpendiculaires aux lames flexibles secondaires 7, 8, 9 de la table de translation 10, 11, 12 en position repos du guidage 1. La position de repos est définie quand les lames principales 3, 4, 5 et secondaires 7, 8, 9 sont droites, donc non courbées.

Le balancier est assemblé sur la partie centrale 6 par la jonction. De préférence, la partie centrale et la jonction sont monoblocs. Ainsi, le balancier est centré par rapport à la partie centrale 6. Dans cette variante, le balancier est formé d'une même matière, c'est-à-dire qu'il est monobloc

Dans ce mode de réalisation, l'élément mobile 26 comporte au moins deux organes formant un balancier. Le premier organe 21 comprend des bras 22, ici trois bras et une jonction axiale 25 monoblocs. Les bras 22 sont concentriques et de même longueurs. Les bras 22 sont dotés à leurs extrémités libres d'une plateforme d'attache 23 munie de trous 24 pour assembler un anneau, l'anneau définissant le deuxième organe de l'élément mobile 26 et n'étant pas représenté sur la figure 2. De préférence, la partie centrale 6 et la jonction axiale 25 du premier organe 21 sont monoblocs.

Lorsque le balancier est en mouvement, il suit, dans le plan du balancier, un mouvement de rotation périodique dans un sens, puis dans l'autre sens, autour d'un axe passant par la jonction et la partie centrale 6. Les lames flexibles principales 3, 4, 5 se courbent et ont une fonction de ressort rappel du balancier pour le faire tourner dans l'autre sens et réciproquement. Les tables de translation 10, 11, 12 permettent aux lames principales 3, 4, 5 de se déplacer longitudinalement en même temps qu'elles se courbent. Les parties rigides 13, 14, 15 des tables de translation 10, 11, 12 se rapprochent de la partie centrale 6 grâce aux lames secondaires 7, 8, 9 lorsque les lames principales 3, 4, 5 se courbent, et s'éloignent de la partie centrale 6 lorsque les lames principales 3, 4, 5 deviennent droites. Ainsi, on conserve un isochronisme du mouvement du balancier grâce aux tables de translation 10, 11, 12. De préférence, les lames tertiaires 16, 17, 18 sont orientées selon les bissectrices des angles formés entre les lames principales 3, 4, 5. De manière équivalente, les lames tertiaires 16, 17, 18 sont, de préférence, orientées selon les bissectrices des angles formés entre les directions des lames des tables de translation 10, 11, 12.

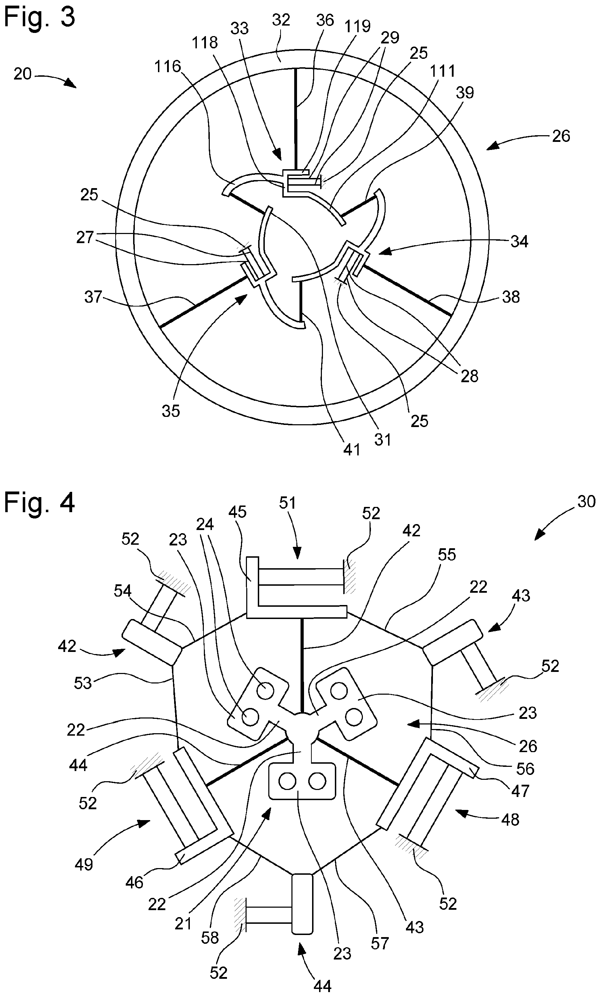

Le troisième mode de réalisation de la figure 3, montre un exemple de guidage flexible 20 ne comportant pas de partie centrale comme celle du deuxième mode de réalisation. Le guidage flexible 20 comprend un support fixe 25, un balancier 32 d'un élément mobile 26, et trois couples formés d'une lame flexible principale 36, 37, 38 d'une table de translation 33, 34, 35. Chaque lame principale 36, 37, 38 est jointe par une première extrémité au balancier 32, et par une deuxième extrémité à une partie rigide d'une table de translation 33, 34, 35. Les couples sont répartis angulairement, de manière à avoir un angle de 120° entre les lames principales 36, 37, 38. Chaque table de translation 33, 34, 35 est agencée en série entre une lame flexible principale 36, 37, 38 et le support fixe 25. La table de translation 33, 34, 35 est jointe au support fixe 25 et à la seconde extrémité de la lame flexible principale 36, 37, 38. Le balancier 32 est agencé autour des tables de translation 33, 34, 35. Ainsi, les tables de de translation 33, 34, 35 sont au centre du guidage flexible 20 et le balancier 26 à la périphérie. Les tables de translations 33, 34, 35 ont la même structure, la même disposition entre elles, et la même forme que les tables de translation du deuxième mode de réalisation. Les lames secondaires 27, 28, 29 des tables de translations 33, 34, 35 sont sensiblement perpendiculaires aux lames principales 36, 37, 38. Les parties rigides des tables de translation 33, 34, 35 comportent quatre segments, les trois premiers 116, 117, 118 sont disposés de la même manière que dans le deuxième mode de réalisation, tandis que le quatrième segment 119 est assemblé au deuxième segment 118, qui est perpendiculaire au deux autres 116, 117. Le quatrième segment 119 est sensiblement parallèle au troisième segment 117 et aux lames secondaires 27, 28, 29 correspondantes. Le troisième segment 117 et le quatrième segment 119 sont agencés de part et d'autre des lames secondaires 27, 28, 29. Les lames principales 36, 37, 38 sont assemblées aux tables de translation 10, 11, 12 par le quatrième segment 119. De préférence, les lames tertiaires 31, 39, 41 sont, de préférence, orientées selon les bissectrices des angles formés entre les lames principales 36, 37, 38. De manière équivalente, les lames tertiaires 31, 39, 41 sont, de préférence, orientées selon les bissectrices des angles formés entre les directions des tables de translation 33, 34, 35.

Le quatrième mode de réalisation du guidage flexible 30 de la figure 4 comprend un support fixe 52, un élément mobile 26 par rapport au support fixe 52 et trois lames flexibles principales 42, 43, 44 permettant à l'élément mobile 20 de se déplacer par rapport au support fixe 52. Par flexion des lames flexibles principales 42, 43, 44 l'élément mobile 20 peut se déplacer par rapport au support 52 dans un mouvement rotatif sur lui-même autour d'un centre de rotation. Les lames principales 42, 43, 44 sont, de préférence, de même longueur et réparties angulairement de manière uniforme autour d'une partie centrale de l'élément mobile 26, de manière à former un pivot symétrique.

Le guidage flexible 30 comprend des tables de translation 48, 49, 51, chaque table de translation étant jointe à une extrémité d'une lame flexible principales 42, 43, 44 différente. Dans ce mode de réalisation, la table de translation 48, 49, 51, est agencée en série entre le support fixe 52 et ladite lame flexible principale 42, 43, 44 correspondante. La table de translation 48, 49, 51, est jointe au support fixe 52 et à une première extrémité de la lame flexible principale 42, 43, 44 correspondante, la lame flexible principale 42, 43, 44 étant jointe à l'élément mobile 26 par une seconde extrémité.

Ainsi, le guidage flexible 30 comprend trois couples, chaque couple étant formé d'une lame flexible principale 42, 43, 44 et d'une table de translation 48, 49, 51. Les couples sont répartis angulairement autour de la partie centrale de l'élément mobile 26, de manière à former un pivot symétrique, chaque lame principale 42, 43, 44 étant jointe par une extrémité à la partie centrale 6 et la table de translation 48, 49, 51 étant jointe au support fixe 52. Les couples, notamment les lames principales 42, 43, 44 forment un angle d'environ 120° entre eux.

Chaque table de translation 48, 49, 51, est configurée pour se déplacer en translation au moins en partie sous l'effet du mouvement de la lame flexible principale 42, 43, 44. Chaque table de translation 48, 49, 51, comprend au moins une lame flexible secondaire, ici deux lames flexibles secondaires et une partie rigide 45, 46, 47. Les lames flexibles secondaires sont jointes par une extrémité à la partie rigide 45, 46, 47, et par une autre extrémité au support fixe 52. La partie rigide 45, 46, 47 forme ici un coude en angle droit, le coude comportant deux segments sensiblement perpendiculaire. La lame flexible principale 42, 43, 44 est jointe au premier segment, tandis que les lames secondaires sont jointes au deuxième segment. Ainsi, les lames flexibles principales 42, 43, 44 sont sensiblement perpendiculaires aux lames flexibles secondaires de la table de translation 48, 49, 51, en position repos du guidage 30. La position de repos est définie quand les lames principales 42, 43, 44 et secondaires sont droites, donc non courbées.

L'élément mobile 26 comporte au moins deux organes. Le premier organe 21 comprend des bras 22, ici trois bras, et une jonction axiale 25 monoblocs. Les bras 22 sont dotés à leurs extrémités libres d'une plateforme d'attache 23 munie de trous 24 pour assembler un élément inertiel, tel une masselotte ou un anneau de préférence, l'élément inertiel définissant le deuxième organe et n'étant pas représenté sur la figure 4. De préférence, la partie centrale 6 et le premier organe 21 sont monoblocs.

En outre, le guidage flexible 30 comprend au moins une table de translation secondaire 42, 43, 44, agencée en série entre deux tables de translation principales. Sur la figure 4, le guidage flexible 30 comprend trois tables de translation secondaires 42, 43, 44. Chaque table de translation secondaire 42, 43, 44 est disposée entre deux tables de translation 48, 49, 51. Une table de translation secondaire 42, 43, 44 comprend deux lames flexibles quaternaires et une partie rigide, les lames flexibles quaternaires étant jointes à la partie rigide des tables de translation secondaires. Les lames flexibles quaternaires sont sensiblement parallèles et sont disposées sur des lignes différentes. De préférence, les lames flexibles secondaires sont jointes à une même face de la partie rigide.

Chaque table de translation secondaire 42, 43, 44 est reliée à deux tables de translation principales 48, 49, 51 par une lame flexible tertiaire 53, 54, 55, 56, 57, 58. Une lame flexible tertiaire 53, 54, 55, 56, 57, 58 relie une table de translation principale 48, 49, 51 à une table de translation secondaire 42, 43, 44. Une table de de translation secondaire 42, 43, 44 comprend deux lames flexibles tertiaires et une partie rigide. La partie rigide a ici une forme parallélépipédique, qui est orientée selon une direction dirigée vers le centre du guidage flexible 30. Les lames flexibles quaternaires relient la partie rigide de la table de translation secondaire au support 52. Le guidage flexible 30 comprend donc des lames flexibles tertiaires 53, 54, 55, 56, 57, 58 reliant les tables de translation secondaires 42, 43, 44 aux tables de translation principales 48, 49, 51. Chaque lame flexible tertiaire 53, 54, 55, 56, 57, 58 relie une table de translation secondaire 42, 43, 44 à une table de translation principale 48, 49, 51 adjacente. Les lames flexibles tertiaires 53, 54, 55, 56, 57, 58 sont jointes à la partie rigide 45, 46, 47 des tables de translation principale 48, 49, 51, de préférence au segment de la partie rigide 45, 46, 47 perpendiculaire aux lames flexibles principales 42, 43, 44. Les lames flexibles tertiaires 53, 54, 55, 56, 57, 58 sont sensiblement de même longueur. Chaque table de translation secondaire 42, 43, 44 est agencée à égale distance des deux tables de translation principales 48, 49, 51 auxquelles elle est jointe. Les tables de translation secondaires 42, 43, 44 peuvent se déplacer selon une direction dirigée vers le centre du guidage flexible 30. Les tables de translation secondaires 42, 43, 44 améliorent encore la précision de la marche du guidage flexible 30 par rapport aux effets de la gravité.

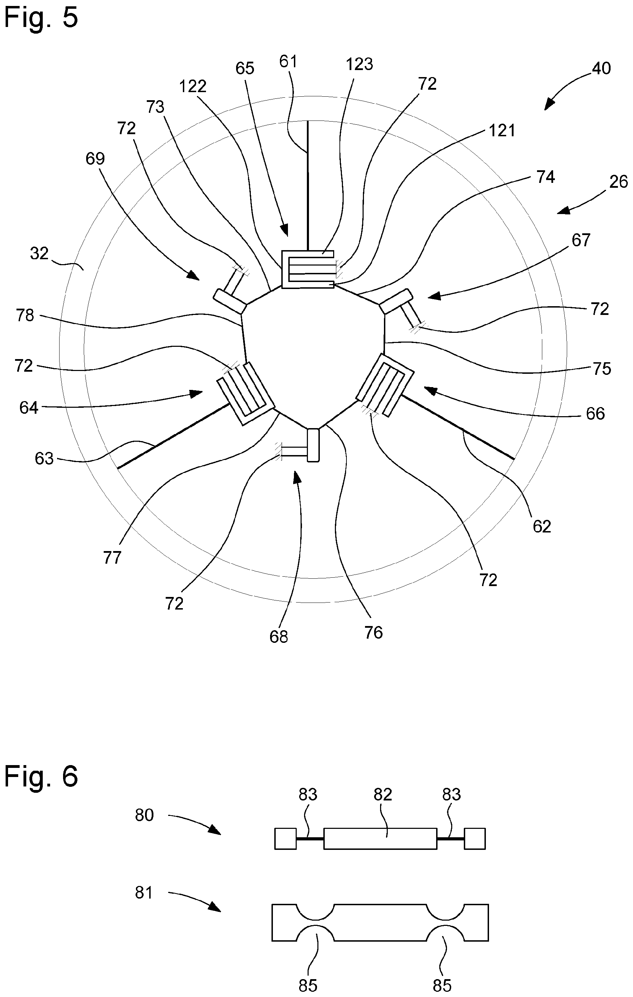

Le mode de réalisation du guidage flexible 40 de la figure 5, comprend également des tables de translation principales 64, 65, 66 et secondaires 67, 68, 69, mais il comprend un élément mobile 26 agencé à la périphérie du guidage flexible 40, et ne comprend pas de partie centrale comme le mode de réalisation de la figure 3. L'agencement des tables de translation principales 64, 65, 66 et secondaires 67, 68, 69 est le même que celui du mode de réalisation de la figure 4.

Le guidage flexible 40 comprend un support fixe 72, un élément mobile 26 par rapport au support fixe 72 et trois lames flexibles principales 61, 62, 63 permettant à l'élément mobile 26 de se déplacer par rapport au support fixe 72. Par flexion des lames flexibles principales 61, 62, 63 l'élément mobile 26 peut se déplacer par rapport au support 72 dans un mouvement rotatif sur lui-même autour d'un centre de rotation. Les lames principales 61, 62, 63 sont, de préférence, de même longueur et réparties angulairement de manière uniforme autour d'une partie centrale de l'élément mobile 26, de manière à former un pivot symétrique.

Le guidage flexible 40 comprend des tables de translation principales 64, 65, 66, chaque table de translation étant jointe à une extrémité d'une lame flexible principales 61, 62, 63 différente. Dans ce mode de réalisation, la table de translation principale 64, 65, 66, est agencée en série entre le support fixe 72 et ladite lame flexible principale 61, 62, 63 correspondante. La table de translation principale 64, 65, 66, est jointe au support fixe 72 et à une première extrémité de la lame flexible principale 61, 62, 63 correspondante, la lame flexible principale 61, 62, 63 étant jointe à l'élément mobile 26 par une seconde extrémité.

Ainsi, le guidage flexible 40 comprend trois couples, chaque couple étant formé d'une lame flexible principale 61, 62, 63 et d'une table de translation principale 64, 65, 66. Les couples sont répartis angulairement, de manière à former un pivot symétrique, chaque lame principale 61, 62, 63 étant jointe par une extrémité à l'élément mobile 26, et la table de translation 64, 65, 66 étant jointe au support fixe 72. Les couples, notamment les lames principales 61, 62, 63 forment un angle d'environ 120° entre eux.

Chaque table de translation principale 64, 65, 66, est configurée pour se déplacer en translation au moins en partie sous l'effet du mouvement de la lame flexible principale 61, 62, 63. Chaque table de translation principale 64, 65, 66, comprend au moins une lame flexible secondaire, ici deux lames flexibles secondaires et une partie rigide. Les lames flexibles secondaires sont sensiblement parallèles et sont disposées sur des lignes différentes. De préférence, les lames flexibles secondaires sont jointes par une extrémité à une même face de la partie rigide, et par une autre extrémité au support fixe 72. La partie rigide forme ici un coude en U, le coude comportant trois segments 121, 122, 123. La lame flexible principale 61, 62, 63 est jointe au premier segment 123, tandis que les lames secondaires sont jointes au deuxième segment 122. Ainsi, les lames flexibles principales 61, 62, 63 sont sensiblement perpendiculaires aux lames flexibles secondaires de la table de translation 64, 65, 66, en position repos du guidage 40. La position de repos est définie quand les lames principales 61, 62, 63 et secondaires sont droites, donc non courbées.

En outre, le guidage flexible 40 comprend au moins une table de translation secondaire 67, 68, 69, agencée en série entre deux tables de translation principales 64, 65, 66. Sur la figure 5, le guidage flexible 30 comprend trois tables de translation secondaires 67, 68, 69. Chaque table de translation secondaire 67, 68, 69 est disposée entre deux tables de translation 64, 65, 66.

Chaque table de translation secondaire 67, 68, 69 est reliée à deux tables de translation principales 64, 65, 69 par une lame flexible tertiaire 73, 74, 75, 76, 77, 78. Une lame flexible tertiaire 73, 74, 75, 76, 77, 78 relie une table de translation principale 64, 65, 69 à une table de translation secondaire 67, 68, 69. Une table de de translation secondaire 67, 68, 69 comprend deux lames flexibles quaternaires et une partie rigide, les lames flexibles quaternaires étant jointes à la partie rigide des tables de translation secondaires 67, 68, 69 et au support 72. La partie rigide a ici une forme parallélépipédique, qui est orientée selon une direction dirigée vers le centre du guidage flexible 40. Le guidage flexible 40 comprend des lames flexibles tertiaire 73, 74, 75, 76, 77, 78 reliant les tables de translation secondaire 67, 68, 69 aux tables de translation principales 64, 65, 69. Chaque lames flexibles tertiaires 73, 74, 75, 76, 77, 78 relie une table de translation secondaire 67, 68, 69 à une table de translation principale 64, 65, 69 adjacente. Les lames flexibles tertiaires 73, 74, 75, 76, 77, 78 sont jointes à la partie rigide des tables de translation, de préférence au troisième segment 121 de la partie rigide perpendiculaire aux lames flexibles principales 61, 62, 63. Les lames flexibles tertiaires 73, 74, 75, 76, 77, 78 sont sensiblement de même longueur. Chaque table de translation secondaire 67, 68, 69 est agencée à égale distance des deux tables de translation principales 64, 65, 69 auxquelles elle est jointe.

Sur les figures des différents modes de réalisation, les lames flexibles sont des lames plates. Cependant, les lames flexibles peuvent aussi comprendre des parties plus ou moins épaisses, ou comprendre des cols, comme celles représentées sur la figure 6. Ainsi, la lame 80 du haut comprend une partie épaisse 82 au milieu, qui est plus rigide, et des parties plus minces 83 aux extrémités. La lame 81 du bas est épaisse sur toute la longueur 84, mais comprend deux cols 85 amincis aux extrémités pour permettre à la lame 81 fléchir.

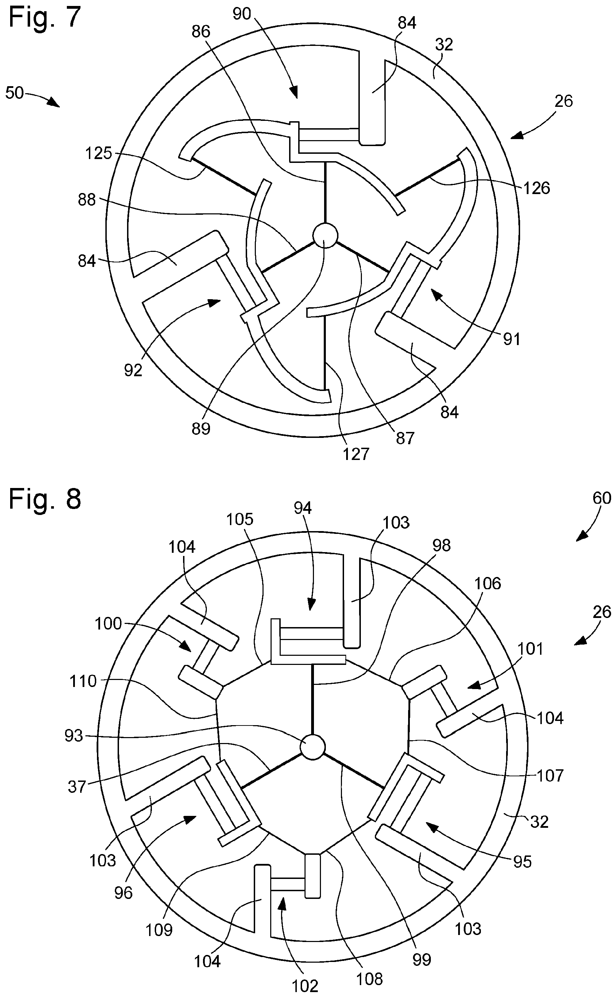

Dans les modes de réalisation des figures 7 et 8, le support fixe comprend la partie centrale 89, 93 sur laquelle sont jointes les premières extrémités des lames flexibles principales, tandis que les tables de translation sont jointes à l'élément mobile.

Sur la figure 7, le sixième mode de réalisation du guidage flexible 50 est semblable au guidage flexible 1 de la figure 2, à la différence que les lames secondaires des tables de translation principales 90, 91, 92, sont jointes à l'élément mobile 26, tandis que les lames principales 83, 84, 85 sont jointes d'une part à la partie centrale du support fixe 82, et d'autre part à la partie rigide des tables de translation principales 90, 91, 92. Les lames flexibles tertiaires 125, 126, 127 sont agencées en série entre les tables de translation principales 90, 91, 92 dans la même configuration que le deuxième mode de réalisation. La partie centrale 89 a aussi une forme de portion cylindrique circulaire. De préférence, l'élément mobile 32 comporte des extensions internes 84 orientées dans le plan vers l'intérieure de l'anneau, afin de permettre l'assemblage des lames flexibles secondaires de chaque table de translation 90, 91, 92. Les extensions 84 s'étendent selon une direction sensiblement parallèle à la direction des lames flexibles principales 86, 87, 88 en position de repos, de sorte que les lames flexibles secondaires de chaque table de translation 90, 91, 92 soient dirigées perpendiculairement à cette direction. Ainsi, les lames flexibles secondaires sont sensiblement perpendiculaires à la direction des lames flexibles principales 86, 87, 88 pour un même couple. Dans ce mode de réalisation, les tables de translation 90, 91, 92 ne sont pas jointes directement au support fixe 89, mais à l'élément mobile 26.

Dans le septième mode de réalisation de la figure 8, le guidage flexible 60 est semblable au guidage flexible 30 de la figure 4, à la différence que les lames secondaires des tables de translation principales 94, 95, 96, sont jointes à l'élément mobile 26, tandis que les lames principales 97, 98, 99 sont jointes d'une part à la partie centrale du support fixe 93, et d'autre part à la partie rigide des tables de translation principales 94, 95, 96. Les lames flexibles tertiaires 105, 106, 107, 108, 109, 110, 111 sont agencées en série entre les tables de translation principales 90, 91, 92 et les tables de translation secondaires 100, 101, 102 dans la même configuration que le quatrième mode de réalisation. La partie centrale du support 93 a une forme de portion cylindrique circulaire. De préférence, l'élément mobile 32 comporte des extensions internes 103, 104 orientées dans le plan vers l'intérieure de l'anneau, afin de permettre l'assemblage des lames flexibles secondaires et quaternaires des tables de translation principales 94, 95, 96 et secondaires 100, 101, 102. Les extensions 103, 104 s'étendent selon une direction sensiblement parallèle à la direction des lames flexibles principales 97, 98, 99 en position de repos, de sorte que les lames flexibles secondaires des tables de translation principales 94, 95, 96 soient dirigées perpendiculairement à cette direction. Ainsi, les lames flexibles secondaires sont sensiblement perpendiculaires à la direction des lames flexibles principales 97, 98, 99. Dans ce mode de réalisation, les tables de translation 97, 98, 99, 100, 101, 102 ne pas sont jointes directement au support fixe 93, mais à l'élément mobile 32.

L'invention se rapporte également à un mécanisme résonateur, notamment pour mouvement d'horlogerie, non représenté sur les figures. Le mécanisme résonateur est muni d'un guidage flexible selon l'un des modes de réalisation décrits ci-dessus.

Naturellement, l'invention n'est pas limitée aux modes de réalisation décrits en référence aux figures et des variantes pourraient être envisagées sans sortir du cadre de l'invention. On peut notamment imaginer un nombre de couples formé d'une lames flexible principal et d'une table de translation, supérieur ou inférieur aux exemples décrits.

## Revendications

1. Guidage flexible (1, 20, 30, 40, 50, 60) pour un mécanisme résonateur rotatif, notamment d'un mouvement d'horlogerie, le guidage (1, 20, 30, 40, 50, 60) comprenant un support fixe (2, 25, 52, 72, 89, 93), un élément mobile (26) par rapport au support fixe (2, 25, 52, 72, 89, 93), au moins deux lames flexibles principales (3, 4, 5, 36, 37, 38, 42, 43, 44, 61, 62, 63, 86, 87, 88, 97, 98, 99) permettant à l'élément mobile (26) de se déplacer par rapport au support fixe (2, 25, 52, 72, 89, 93) par flexion des lames flexibles principales (3, 4, 5, 36, 37, 38, 42, 43, 44, 61, 62, 63, 86, 87, 88, 97, 98, 99) dans un mouvement rotatif autour d'un centre de rotation, le guidage flexible (1, 20, 30, 40, 50, 60) étant agencé sensiblement dans un plan, comprenant au moins deux tables de translation (10, 11, 12, 33, 34, 35, 48, 49, 51, 64, 65, 66, 90, 91, 92, 94, 95, 96) jointes chacune à une extrémité d'une lame flexible principale (3, 4, 5, 36, 37, 38, 42, 43, 44, 61, 62, 63, 86, 87, 88, 97, 98, 99) différente, de sorte que chaque table de translation (10, 11, 12, 33, 34, 35, 48, 49, 51, 64, 65, 66, 90, 91, 92, 94, 95, 96) soit configurée pour se déplacer en translation au moins en partie sous l'effet de la flexion de la lame flexible principale (3, 4, 5, 36, 37, 38, 42, 43, 44, 61, 62, 63, 86, 87, 88, 97, 98, 99) correspondante, le guidage flexible (1, 20, 30, 40, 60) étant **caractérisé en ce qu'**il comprend au moins une lame flexible tertiaire (16, 17, 18, 31, 39, 41, 54, 55, 56, 57, 58, 59, 73, 74, 75, 76, 77, 78, 125, 126, 127, 105, 106, 107, 108, 109, 110) reliant les deux tables de translation (10, 11, 12, 33, 34, 35, 48, 49, 51, 64, 65, 66, 90, 91, 92, 94, 95, 96).

2. Guidage flexible selon la revendication 1, **caractérisé en ce qu'**il comprend au moins trois couples, chaque couple étant formé d'une lame principale (3, 4, 5, 36, 37, 38, 42, 43, 44, 61, 62, 63, 86, 87, 88, 97, 98, 99) et d'une table de translation (10, 11, 12, 33, 34, 35, 48, 49, 51, 64, 65, 66, 90, 91, 92, 94, 95, 96), les couples étant répartis angulairement de manière à former un pivot symétrique, le guidage (1, 20, 30, 40, 50, 60) comprenant au moins deux lames flexibles tertiaires (16, 17, 18, 31, 39, 41, 54, 55, 56, 57, 58, 59, 73, 74, 75, 76, 77, 78, 125, 126, 127, 105, 106, 107, 108, 109, 110), de préférence trois lames flexibles tertiaires, reliant les tables de translation (10, 11, 12, 33, 34, 35, 48, 49, 51, 64, 65, 66, 90, 91, 92, 94, 95, 96) deux à deux.

3. Guidage flexible selon la revendication 1 ou 2, **caractérisé en ce que** chaque table de translation (10, 11, 12, 33, 34, 35, 48, 49, 51, 64, 65, 66) est agencée en série entre le support fixe (2, 25, 52, 72) et ladite lame flexible principale (3, 4, 5, 36, 37, 38, 42, 43, 44, 61, 62, 63) correspondante, la table de translation (10, 11, 12, 33, 34, 35, 48, 49, 51, 64, 65, 66) étant jointe au support fixe (2, 25, 52, 72) et à une première extrémité de la lame flexible principale (3, 4, 5, 36, 37, 38, 42, 43, 44, 61, 62, 63), la lame flexible principale (3, 4, 5, 36, 37, 38, 42, 43, 44, 61, 62, 63) étant jointe à l'élément mobile (26) par une seconde extrémité.

4. Guidage flexible selon la revendication 1 ou 2, **caractérisé en ce que** chaque table de translation (90, 91, 92, 94, 95, 96) est agencée en série entre ladite lame flexible principale (86, 87, 88, 97, 98, 99) correspondante et l'élément mobile (26), la table de translation (90, 91, 92, 94, 95, 96) étant jointe à l'élément mobile (26) et à la seconde extrémité de la lame flexible principale (86, 87, 88, 97, 98, 99), la lame flexible principale (86, 87, 88, 97, 98, 99) étant jointe au support fixe (89, 93) par la première extrémité.

5. Guidage flexible selon la revendication 3, **caractérisé en ce que** l'élément mobile (26) comprend une partie centrale (6) du guidage flexible (1, 20, 30).

6. Guidage flexible selon la revendication 4, **caractérisé en ce que** le support fixe (89, 93) comprend une partie centrale (6) du guidage flexible (50, 60).

7. Guidage flexible selon l'une, quelconque, des revendications précédentes, **caractérisé en ce que** la table de translation principale (10, 11, 12, 33, 34, 35, 46, 47, 48, 49, 71, 72, 73, 74, 75, 76, 77, 78) comprend au moins deux lames flexibles secondaires (7, 8, 9, 27, 28, 29), et une partie rigide (13, 14, 15, 45, 46, 47), les lames flexibles secondaires (7, 8, 9, 27, 28, 29) étant jointes par une extrémité à la partie rigide (13, 14, 15, 45, 46, 47), et par une autre extrémité, soit au support fixe (2, 25, 52, 72), soit à l'élément mobile (26).

8. Guidage flexible selon l'une, quelconque, des revendications précédentes, **caractérisé en ce qu'**il comprend au moins une table de translation secondaire (42, 43, 44, 67, 68, 69, 100, 101, 102), agencée en série entre deux tables de translation principales (48, 49, 51, 64, 65, 66, 94, 95, 96), chaque table de translation secondaire (42, 43, 44, 67, 68, 69, 100, 101, 102) étant reliée à deux tables de translation principales (48, 49, 51, 64, 65, 66, 94, 95, 96) par une lame flexible tertiaire (54, 55, 56, 57, 58, 59, 73, 74, 75, 76, 77, 78, 105, 106, 107, 108, 109, 110) par table de translation principale (48, 49, 51, 64, 65, 66, 94, 95, 96).

9. Guidage flexible selon la revendication 8, **caractérisé en ce que** la table de translation secondaire (42, 43, 44, 67, 68, 69, 100, 101, 102) comprend deux lames flexibles quaternaires, et une partie rigide, les lames flexibles quaternaires étant jointes à la partie rigide des tables de translation secondaires (42, 43, 44, 67, 68, 69, 100, 101, 102) par une extrémité et par une autre extrémité, soit au support fixe (2, 25, 52, 72), soit à l'élément mobile (26)

10. Guidage flexible selon l'une, quelconque, des revendications précédentes, **caractérisé en ce que** les lames flexibles tertiaires (16, 17, 18, 31, 39, 41, 54, 55, 56, 57, 58, 59, 73, 74, 75, 76, 77, 78, 125, 126, 127, 105, 106, 107, 108, 109, 110) sont jointes aux parties rigides (13, 14, 15, 45, 46, 47) des deux tables de translation (10, 11, 12, 33, 34, 35, 48, 49, 51, 64, 65, 66, 90, 91, 92, 94, 95, 96, 42, 43, 44, 67, 68, 69, 100, 101, 102) qu'elles relient.

11. Guidage flexible selon la revendication 10, **caractérisé en ce que** la partie rigide (13, 14, 15, 45, 46, 47) forme un coude de sorte que la ou les lames flexibles principales (3, 4, 5, 36, 37, 38, 42, 43, 44, 61, 62, 63, 86, 87, 88, 97, 98, 99) soient sensiblement perpendiculaires à la ou aux lames flexibles secondaires (7, 8, 9, 27, 28, 29) de la table de translation (10, 11, 12, 33, 34, 35, 48, 49, 51, 64, 65, 66, 90, 91, 92, 94, 95, 96) jointe à la lame flexible principale (3, 4, 5, 36, 37, 38, 42, 43, 44, 61, 62, 63, 86, 87, 88, 97, 98, 99) en position de repos du guidage (1, 20, 30, 40, 50, 60).

12. Guidage flexible selon l'une, quelconque, des revendications précédentes, **caractérisé en ce que** l'élément mobile (26) comprend un balancier (32).

13. Mécanisme résonateur rotatif, notamment pour mouvement horloger, **caractérisé en ce qu'**il comprend un guidage flexible (1, 20, 30, 40, 50, 60) selon l'une, quelconque, des revendications précédentes.

## Patentansprüche

1. Flexible Führung (1, 20, 30, 40, 50, 60) für einen rotierenden Resonatormechanismus, insbesondere einer Uhrwerksbewegung, wobei die Führung (1, 20, 30, 40, 50, 60) eine feste Halterung (2, 25, 52, 72, 89, 93), ein bewegliches Element (26) relativ zur festen Halterung (2, 25, 52, 72, 89, 93) und mindestens zwei Hauptfederblätter (3, 4, 5, 36, 37, 38, 42, 43, 44, 61, 62, 63, 86, 87, 88, 97, 98, 99) umfasst, die es dem beweglichen Element (26) ermöglichen, sich relativ zur festen Halterung (2, 25, 52, 72, 89, 93) durch Biegung der Hauptfederblätter (3, 4, 5, 36, 37, 38, 42, 43, 44, 61, 62, 63, 86, 87, 88, 97, 98, 99) in einer Drehbewegung um ein Drehzentrum zu bewegen, wobei die flexible Führung (1, 20, 30, 40, 50, 60) im Wesentlichen in einer Ebene angeordnet ist und mindestens zwei Verschiebetische (10, 11, 12, 33, 34, 35, 48, 49, 51, 64, 65, 66, 90, 91, 92, 94, 95, 96) umfasst, die jeweils mit einem Ende eines anderen Hauptfederblatts (3, 4, 5, 36, 37, 38, 42, 43, 44, 61, 62, 63, 86, 87, 88, 97, 98, 99) verbunden sind, sodass jeder Verschiebetisch (10, 11, 12, 33, 34, 35, 48, 49, 51, 64, 65, 66, 90, 91, 92, 94, 95, 96) so konfiguriert ist, dass er sich zumindest teilweise unter der Wirkung der Biegung des entsprechenden Hauptfederblatts (3, 4, 5, 36, 37, 38, 42, 43, 44, 61, 62, 63, 86, 87, 88, 97, 98, 99) translatorisch bewegt, wobei die flexible Führung (1, 20, 30, 40, 60) **dadurch gekennzeichnet ist, dass** sie mindestens ein tertiäres Federblatt (16, 17, 18, 31, 39, 41, 54, 55, 56, 57, 58, 59, 73, 74, 75, 76, 77, 78, 125, 126, 127, 105, 106, 107, 108, 109, 110) umfasst, das die beiden Verschiebetische (10, 11, 12, 33, 34, 35, 48, 49, 51, 64, 65, 66, 90, 91, 92, 94, 95, 96) verbindet.

2. Flexible Führung nach Patentanspruch 1, wobei sie mindestens drei Paare umfasst, wobei jedes Paar aus einer Hauptklinge (3, 4, 5, 36, 37, 38, 42, 43, 44, 61, 62, 63, 86, 87, 88, 97, 98, 99) und einem Verschiebetisch (10, 11, 12, 33, 34, 35, 48, 49, 51, 64, 65, 66, 90, 91, 92, 94, 95, 96) besteht, wobei die Paare winkelmäßig so verteilt sind, dass sie einen symmetrischen Drehpunkt bilden, wobei die Führung (1, 20, 30, 40, 50, 60) mindestens zwei tertiäre flexible Lamellen (16, 17, 18, 31, 39, 41, 54, 55, 56, 57, 58, 59, 73, 74, 75, 76, 77, 78, 125, 126, 127, 105, 106, 107, 108, 109, 110), vorzugsweise drei flexible tertiäre Lamellen, die die Verschiebetische (10, 11, 12, 33, 34, 35, 48, 49, 51, 64, 65, 66, 90, 91, 92, 94, 95, 96) paarweise verbindet.

3. Flexible Führung nach Patentanspruch 1 oder 2, **dadurch gekennzeichnet, dass** jeder Verschiebetisch (10, 11, 12, 33, 34, 35, 48, 49, 51, 64, 65, 66) in Reihe zwischen dem festen Träger (2, 25, 52, 72) und der genannten flexiblen Hauptklinge (3, 4, 5, 36, 37, 38, 42, 43, 44, 61, 62, 63) in Reihe angeordnet ist, wobei der Verschiebetisch (10, 11, 12, 33, 34, 35, 48, 49, 51, 64, 65, 66) mit dem festen Träger (2, 25, 52, 72) und einem ersten Ende der flexiblen Hauptlamelle (3, 4, 5, 36, 37, 38, 42, 43, 44, 61, 62, 63) verbunden ist, wobei die flexible Hauptklinge (3, 4, 5, 36, 37, 38, 42, 43, 44, 61, 62, 63) an einem zweiten Ende mit dem beweglichen Element (26) verbunden ist.

4. Flexible Führung nach Anspruch 1 oder 2, **dadurch gekennzeichnet, dass** jeder Verschiebetisch (90, 91, 92, 94, 95, 96) in Reihe zwischen der genannten entsprechenden flexiblen Hauptblattfeder (86, 87, 88, 97, 98, 99) und dem beweglichen Element (26) angeordnet ist, wobei der Verschiebetisch (90, 91, 92, 94, 95, 96) mit dem beweglichen Element (26) und mit dem zweiten Ende der flexiblen Hauptblattfeder (86, 87, 88, 97, 98, 99) verbunden ist, wobei die flexible Hauptblattfeder (86, 87, 88, 97, 98, 99) mit der festen Halterung (89, 93) über das erste Ende verbunden ist.

5. Flexible Führung nach Patentanspruch 3, wobei das bewegliche Element (26) einen mittleren Abschnitt (6) der flexiblen Führung (1, 20, 30) umfasst.

6. Flexible Führung nach Patentanspruch 4, wobei die feste Halterung (89, 93) einen mittleren Abschnitt (6) der flexiblen Führung (50, 60) umfasst.

7. Flexible Führung nach einem beliebigen der vorstehenden Patentansprüche, wobei der Hauptverschiebetisch (10, 11, 12, 33, 34, 35, 46, 47, 48, 49, 71, 72, 73, 74, 75, 76, 77, 78) mindestens zwei flexible Sekundärlamellen (7, 8, 9, 27, 28, 29) und einen starren Teil (13, 14, 15, 45, 46, 47) umfasst, wobei die flexiblen Sekundärlamellen (7, 8, 9, 27, 28, 29) an einem Ende mit dem starren Teil (13, 14, 15, 45, 46, 47) verbunden sind und am anderen Ende entweder mit der festen Halterung (2, 25, 52, 72) oder mit dem beweglichen Element (26).

8. Flexible Führung gemäß einem beliebigen der vorstehenden Patentansprüche, wobei sie mindestens einen sekundären Verschiebetisch (42, 43, 44, 67, 68, 69, 100, 101, 102) umfasst, der in Reihe zwischen zwei Hauptverschiebetischen (48, 49, 51, 64, 65, 66, 94, 95, 96) angeordnet ist, wobei jeder sekundäre Verschiebetisch (42, 43, 44, 67, 68, 69, 100, 101, 102) mit zwei Hauptverschiebetischen (48, 49, 51, 64, 65, 66, 94, 95, 96) über jeweils eine tertiäre flexible Lamelle (54, 55, 56, 57, 58, 59, 73, 74, 75, 76, 77, 78, 105, 106, 107, 108, 109, 110) pro Hauptverschiebetisch verbunden ist.

9. Flexible Führung nach Patentanspruch 8, wobei der sekundäre Verschiebetisch (42, 43, 44, 67, 68, 69, 100, 101, 102) zwei quaternäre flexible Lamellen und einen starren Teil umfasst, wobei die quaternären flexiblen Lamellen an dem starren Teil der sekundären Verschiebetische (42, 43, 44, 67, 68, 69, 100, 101, 102) an einem Ende und am anderen Ende entweder mit der festen Halterung (2, 25, 52, 72) oder mit dem beweglichen Element (26) verbunden sind.

10. Flexible Führung gemäß einem beliebigen der vorstehenden Patentansprüche, wobei die tertiären flexiblen Lamellen (16, 17, 18, 31, 39, 41, 54, 55, 56, 57, 58, 59, 73, 74, 75, 76, 77, 78, 125, 126, 127, 105, 106, 107, 108, 109, 110) mit den starren Teilen (13, 14, 15, 45, 46, 47) der beiden Verschiebetische (10, 11, 12, 33, 34, 35, 48, 49, 51, 64, 65, 66, 90, 91, 92, 94, 95, 96, 42, 43, 44, 67, 68, 69, 100, 101, 102) verbunden sind, die sie miteinander verbinden.

11. Flexible Führung nach Patentanspruch 10, wobei der starre Teil (13, 14, 15, 45, 46, 47) eine Biegung bildet, sodass die flexible(n) Hauptlamelle(n) (3, 4, 5, 36, 37, 38, 42, 43, 44, 61, 62, 63, 86, 87, 88, 97, 98, 99) im Wesentlichen senkrecht zu der oder den flexiblen Nebenlamellen (7, 8, 9, 27, 28, 29) des Verschiebetisches (10, 11, 12, 33, 34, 35, 48, 49, 51, 64, 65, 66, 90, 91, 92, 94, 95, 96) verbunden ist, die mit der flexiblen Hauptlamelle (3, 4, 5, 36, 37, 38, 42, 43, 44, 61, 62, 63, 86, 87, 88, 97, 98, 99) in der Ruhestellung der Führung (1, 20, 30, 40, 50, 60) verbunden ist.

12. Flexible Führung gemäß einem beliebigen der vorstehenden Patentansprüche, wobei das bewegliche Element (26) eine Unruh (32) umfasst.

13. Rotationsresonanzmechanismus, insbesondere für Uhrwerke, **dadurch gekennzeichnet, dass** er eine flexible Führung (1, 20, 30, 40, 50, 60) gemäß einem beliebigen der vorstehenden Patentansprüche umfasst.

## Claims

1. A flexible guide (1, 20, 30, 40, 50, 60) for a rotating resonator mechanism, in particular of a horological movement, the guide (1, 20, 30, 40, 50, 60) comprising a fixed support (2, 25, 52, 72, 89, 93), an element (26) that is mobile relative to the fixed support (2, 25, 52, 72, 89, 93), at least two main flexible blades (3, 4, 5, 36, 37, 38, 42, 43, 44, 61, 62, 63, 86, 87, 88, 97, 98, 99) enabling the mobile element (26) to move relative to the fixed support (2, 25, 52, 72, 89, 93) by deflection of the main flexible blades (3, 4, 5, 36, 37, 38, 42, 43, 44, 61, 62, 63, 86, 87, 88, 97, 98, 99) in a rotary movement about a centre of rotation, the flexible guide (1, 20, 30, 40, 50, 60) being arranged substantially in one plane, comprising at least two translation tables (10, 11, 12, 33, 34, 35, 48, 49, 51, 64, 65, 66, 90, 91, 92, 94, 95, 96), each joined to one end of a different main flexible blade (3, 4, 5, 36, 37, 38, 42, 43, 44, 61, 62, 63, 86, 87, 88, 97, 98, 99), such that each translation table (10, 11, 12, 33, 34, 35, 48, 49, 51, 64, 65, 66, 90, 91, 92, 94, 95, 96) is configured to move in translation at least partially under the effect of the deflection of the corresponding main flexible blade (3, 4, 5, 36, 37, 38, 42, 43, 44, 61, 62, 63, 86, 87, 88, 97, 98, 99), the flexible guide (1, 20, 30, 40, 60) being **characterised in that** it comprises at least one tertiary flexible blade (16, 17, 18, 31, 39, 41, 54, 55, 56, 57, 58, 59, 73, 74, 75, 76, 77, 78, 125, 126, 127, 105, 106, 107, 108, 109, 110) connecting the two translation tables (10, 11, 12, 33, 34, 35, 48, 49, 51, 64, 65, 66, 90, 91, 92, 94, 95, 96).

2. The flexible guide according to claim 1, **characterised in that** it comprises at least three pairs, each pair being formed by a main blade (3, 4, 5, 36, 37, 38, 42, 43, 44, 61, 62, 63, 86, 87, 88, 97, 98, 99) and a translation table (10, 11, 12, 33, 34, 35, 48, 49, 51, 64, 65, 66, 90, 91, 92, 94, 95, 96), the pairs being angularly distributed so as to form a symmetrical pivot, the guide (1, 20, 30, 40, 50, 60) comprising at least two tertiary flexible blades (16, 17, 18, 31, 39, 41, 54, 55, 56, 57, 58, 59, 73, 74, 75, 76, 77, 78, 125, 126, 127, 105, 106, 107, 108, 109, 110), preferably three tertiary flexible blades, connecting the translation tables (10, 11, 12, 33, 34, 35, 48, 49, 51, 64, 65, 66, 90, 91, 92, 94, 95, 96) in pairs.

3. The flexible guide according to claim 1 or 2, **characterised in that** each translation table (10, 11, 12, 33, 34, 35, 48, 49, 51, 64, 65, 66) is arranged in series between the fixed support (2, 25, 52, 72) and said corresponding main flexible blade (3, 4, 5, 36, 37, 38, 42, 43, 44, 61, 62, 63), the translation table (10, 11, 12, 33, 34, 35, 48, 49, 51, 64, 65, 66) being joined to the fixed support (2, 25, 52, 72) and to a first end of the main flexible blade (3, 4, 5, 36, 37, 38, 42, 43, 44, 61, 62, 63), the main flexible blade (3, 4, 5, 36, 37, 38, 42, 43, 44, 61, 62, 63) being joined to the mobile element (26) at a second end.

4. The flexible guide according to claim 1 or 2, **characterised in that** each translation table (90, 91, 92, 94, 95, 96) is arranged in series between said corresponding main flexible blade (86, 87, 88, 97, 98, 99) and the mobile element (26), the translation table (90, 91, 92, 94, 95, 96) being joined to the mobile element (26) and to the second end of the main flexible blade (86, 87, 88, 97, 98, 99), the main flexible blade (86, 87, 88, 97, 98, 99) being joined to the fixed support (89, 93) at the first end.

5. The flexible guide according to claim 3, **characterised in that** the mobile element (26) comprises a central part (6) of the flexible guide (1, 20, 30).

6. The flexible guide according to claim 4, **characterised in that** the fixed support (89, 93) comprises a central part (6) of the flexible guide (50, 60).

7. The flexible guide according to any of the preceding claims, **characterised in that** the main translation table (10, 11, 12, 33, 34, 35, 46, 47, 48, 49, 71, 72, 73, 74, 75, 76, 77, 78) comprises at least two secondary flexible blades (7, 8, 9, 27, 28, 29), and a rigid part (13, 14, 15, 45, 46, 47), the secondary flexible blades (7, 8, 9, 27, 28, 29) being joined at one end to the rigid part (13, 14, 15, 45, 46, 47) and at another end either to the fixed support (2, 25, 52, 72) or to the mobile element (26).

8. The flexible guide according to any of the preceding claims, **characterised in that** it comprises at least one secondary translation table (42, 43, 44, 67, 68, 69, 100, 101, 102) arranged in series between two main translation tables (48, 49, 51, 64, 65, 66, 94, 95, 96), each secondary translation table (42, 43, 44, 67, 68, 69, 100, 101, 102) being connected to two main translation tables (48, 49, 51, 64, 65, 66, 94, 95, 96) by one tertiary flexible blade (54, 55, 56, 57, 58, 59, 73, 74, 75, 76, 77, 78, 105, 106, 107, 108, 109, 110) per main translation table (48, 49, 51, 64, 65, 66, 94, 95, 96).

9. The flexible guide according to claim 8, **characterised in that** the secondary translation table (42, 43, 44, 67, 68, 69, 100, 101, 102) comprises two quaternary flexible blades and a rigid part, the quaternary flexible blades being joined to the rigid part of the secondary translation tables (42, 43, 44, 67, 68, 69, 100, 101, 102) at one end and at another end either to the fixed support (2, 25, 52, 72) or to the mobile element (26).

10. The flexible guide according to any of the preceding claims, **characterised in that** the tertiary flexible blades (16, 17, 18, 31, 39, 41, 54, 55, 56, 57, 58, 59, 73, 74, 75, 76, 77, 78, 125, 126, 127, 105, 106, 107, 108, 109, 110) are joined to the rigid parts (13, 14, 15, 45, 46, 47) of the two translation tables (10, 11, 12, 33, 34, 35, 48, 49, 51, 64, 65, 66, 90, 91, 92, 94, 95, 96, 42, 43, 44, 67, 68, 69, 100, 101, 102) connected thereby.

11. The flexible guide according to claim 10, **characterised in that** the rigid part (13, 14, 15, 45, 46, 47) forms a bend such that the main flexible blade or blades (3, 4, 5, 36, 37, 38, 42, 43, 44, 61, 62, 63, 86, 87, 88, 97, 98, 99) are substantially perpendicular to the secondary flexible blade or blades (7, 8, 9, 27, 28, 29) of the translation table (10, 11, 12, 33, 34, 35, 48, 49, 51, 64, 65, 66, 90, 91, 92, 94, 95, 96) joined to the main flexible blade (3, 4, 5, 36, 37, 38, 42, 43, 44, 61, 62, 63, 86, 87, 88, 97, 98, 99) when the guide (1, 20, 30, 40, 50, 60) is in the lock position.

12. The flexible guide according to any of the preceding claims, **characterised in that** the mobile element (26) comprises a balance (32).

13. A rotating resonator mechanism, in particular for a horological movement, **characterised in that** it comprises a flexible guide (1, 20, 30, 40, 50, 60) according to any of the preceding claims.
